# EUROPEAN PATENT APPLICATION

(11) **EP 2 680 149 A1**
(43) Date of publication of application: **01.01.2014**
(21) Application number: 11859197.3
(22) Date of filing: 24.02.2011
(51) Int. Cl.: G06F 11/20

(54) **INFORMATION PROCESSING APPARATUS**

(71) Applicant: Fujitsu Limited, Kawasaki-shi, Kanagawa 211-8588 (JP)
(72) Inventor: UEKI, Toshikazu, Sunnyvale, 94085 California (US); MATSUI, Takao, Kawasaki-shi Kanagawa 211-8588 (JP); KITAGO, Keita, Kawasaki-shi Kanagawa 211-8588 (JP); SATO, Kenta, Kawasaki-shi Kanagawa 211-8588 (JP)
(74) Representative: HOFFMANN EITLE
(86) International application number: PCT/JP2011/054162
(87) International publication number: WO 2012/114498

(57) **Abstract**

An information processing device includes: a computing device having a first path for connecting between a computing unit configured to execute a computation process and a peripheral device, a second path for connecting between a computing unit that is included in another computing device and configured to execute a computation process and the peripheral device, and a switching unit configured to switch between the first path and the second path according to a switching signal; and a signal generation unit configured to generate a switching signal, and to output the generated signal to the switching unit.

## Description

### Field

The present invention relates to an information processing device able to include a plurality of processors.

### Background

Conventionally, a server where two CPUs (Central Processing Units) are mounted on one system board is present. The reasons are such that an advantage of scale is enabled to be brought by a number of use purposes for executing processes with the two CPUs, and cost reductions are achieved by sharing parts. Another reason is such that since a plurality of CPUs are present, business operations are able to be continued by excluding a faulty CPU even if a fault occurs in one of the plurality of CPUs.

In the meantime, with the recent development of semiconductor technologies, it has become possible to shrink transistors, and to incorporate many functions into one semiconductor chip. For example, since it has become possible to include a memory controller within a CPU, the CPU and a memory have been directly connected.

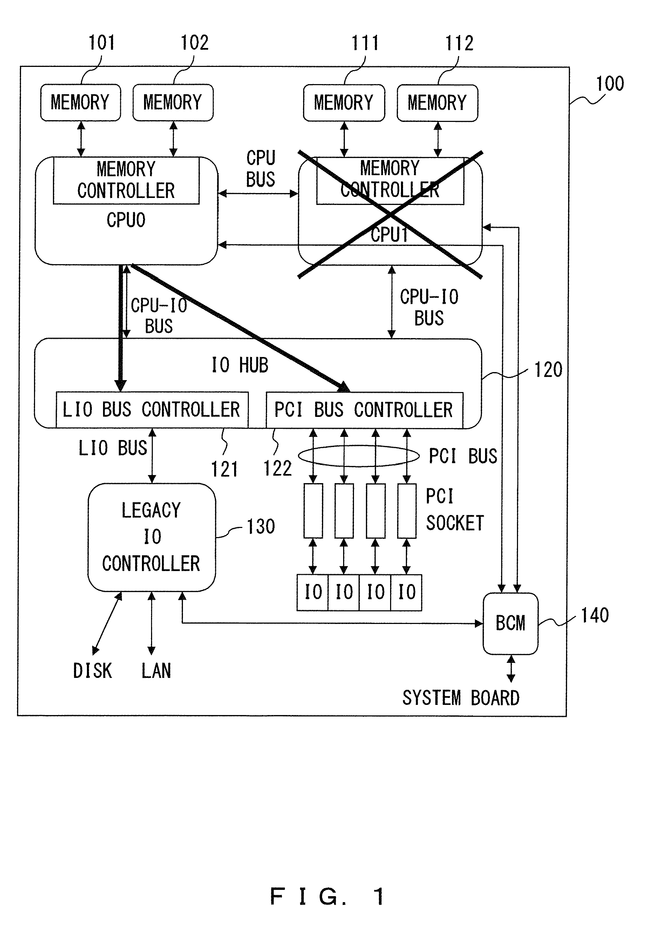

FIG 1. illustrates an outline of a system board 100 included in a server.
The system board 100 includes CPUs 0 and 1, memories 101 and 102, memories 111 and 112, an IO hub 120, a legacy IO (Input/Output) controller 130, and a BCM (Board Control Management unit) 140.

Since the CPU 0 includes a memory controller, the CPU 0 is enabled to be directly connected to the memories 101 and 102. Since also the CPU 1 includes a memory controller, the CPU 1 is enabled to be directly connected to the memories 111 and 112.

In the meantime, the IO hub 120 includes a LIO (Legacy IO) bus controller 121, and a PCI (Peripheral Component Interconnect) bus controller 122. The CPU 0 and the CPU 1 share the IO hub 120.

For example, the CPU 0 exchanges data with a disk and a LAN (Local Area Network), which are connected to the legacy IO controller 130, via the LIO bus controller 121 within the IO hub 120. Moreover, the CPU 0 exchanges data with an IO (Input/Output) device connected to a PCI socket via the PCI bus controller 122 within the IO hub 120.

Similarly, the CPU 1 exchanges data with the disk and the LAN, which are connected to the legacy IO controller 130, via the LIO bus controller 121. Moreover, the CPU 1 exchanges data with the IO device connected to the PCI socket via the PCI bus controller 122.

Accordingly, for example, even if the CPU 1 is in a faulty state, the CPU 0 is able to exchange data with the disk and the LAN, which are connected to the legacy IO controller 130, and the IO device connected to the PCI socket via the IO hub 120 as described above.

In relation to the above described technique, a complex computer system where bus adapters that are directly linked to respective memory buses in first and second computers are connected is known. The bus adapters respectively include a burst access mechanism and a random access mechanism, which are fundamentally configured with a request mechanism for the side of a memory bus, and independently perform operations. Since the bus adapters having a small amount of hardware are directly connected to the memory buses, a data transfer is enabled to be performed finely at high speed.

Additionally, a scalable shared memory multiprocessor computer system where a bus mechanism within a node of a specific type connects each system cell within each node to another cell within the same node is known. In this system, a plurality of nodes are able to share an inter-node bus.

Additionally, a shared nonvolatile memory embedded or integrated in a circuit used in a multiprocessor device is known.

Patent Document 1: Japanese Laid-open Patent Publication No. HEI05-143561
Patent Document 2: Japanese Laid-open Patent Publication No. 2001-147903
Patent Document 3: Japanese Laid-open Patent Publication No. 2004-522235

Additionally, with the recent development of semiconductor technologies, it has become possible to incorporate many functions into one semiconductor chip. Therefore, the LIO bus controller 121, the PCI bus controller 122, and the like, which are illustrated in FIG. 1, are enabled to be included within a CPU.

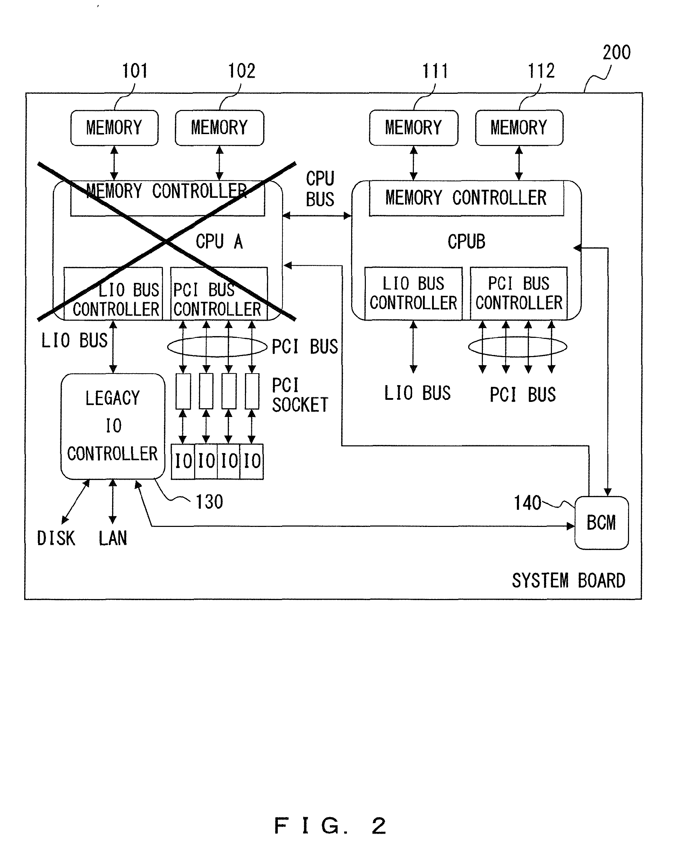

FIG. 2 illustrates a system board 200 including a CPU in which a LIO bus controller and a PCI bus controller are incorporated.
The system board 200 includes, CPUs A and B, memories 101 and 102, memories 111 and 112, a legacy IO controller 130, and a BCM 140.

The CPUs A and B include a LIO bus controller and a PCI bus controller in addition to a memory controller. In this case, for example, the CPU A is able to directly connect to the legacy IO controller 130. Moreover, the CPU A is able to directly connect also to a PCI socket.

Here, one legacy IO controller is sufficient in many cases. In this case, the legacy IO controller 130 is connected, for example, only to the CPU A as illustrated in FIG. 2.

Additionally, if attempts are made to downsize a housing, the number of provided PCI sockets is restricted in some cases. In this case, PCI sockets are provided, for example, only in the CPU A as illustrated in FIG. 2.

In the case of the connection form illustrated in FIG. 2, the CPU B uses the legacy IO controller 130 and the PCI sockets via the CPU A connected by a CPU bus. In this case, when a fault occurs in the CPU A, the CPU B is disabled to access a disk and a LAN, which are connected to the legacy IO controller 130, and an IO device and the like connected to the PCI socket. As a result, also the CPU B is disabled to run when the fault occurs in the CPU A.

In one aspect, an information processing device aims at enabling another computing device to continuously use a peripheral device connected to a computing device that is disabled to run even if the computing device included in the information processing device is disabled to run.

### SUMMARY

According to one aspect of this information processing device (the embodiments?), the information processing device includes the following components.
This information processing device includes a plurality of computing devices that connect to a peripheral device.
The computing device includes a first path, a second path, and a switching unit. The first path is a path for connecting between a computing unit configured to execute a computation process and the peripheral device. The second path is a path for connecting between a computing unit that is included in another computing device and executes a computation process and the peripheral device. The switching unit switches between the first path and the second path according to a switching signal.

A signal generation unit generates the switching signal, and outputs the generated signal to the switching unit.

According to one aspect of this information processing device, even if a computing device included in the information processing device is disabled to run, anther computing device is enabled to continuously use a peripheral device connected to the computing device that is disabled to run.

### BRIEF DESCRIPTION OF DRAWINGS

FIG. 1 illustrates a system board 100 included in a server;
FIG. 2 illustrates a system board 200 where a CPU including a LIO bus controller and a PCI bus controller is mounted;
FIG. 3 is an explanatory diagram of an information processing device 300 according to an embodiment;
FIG. 4 illustrates a system board 400 included in the information processing device according to the embodiment;
FIG. 5 illustrates a specific example of the system board 400 illustrated in FIG. 4;
FIG. 6 illustrates a specific configuration example of switches SW1, SW2, SW3, SW4, and SW5, which are illustrated in FIG. 4;
FIG. 7 is a flowchart illustrating an error detection process of a CPU 410 illustrated in FIG. 5;
FIG. 8 is a flowchart illustrating an error detection process of the system board 400 illustrated in FIG. 4.
FIG. 9 is a flowchart illustrating a reboot process of the system board 400 illustrated in FIG. 4;
FIG. 10 illustrates a modification example of the system board 400 illustrated in FIG. 5;
FIG. 11 illustrates a modification example of the system board 400 illustrated in FIG. 5;
FIG. 12 illustrates a connection example of IO devices on the system board 400 illustrated in FIG. 4;
FIG. 13 illustrates a modification example of the CPU 410 illustrated in FIG. 4;
FIG. 14 illustrates a modification example of the CPU 410 illustrated in FIG. 4;
FIG. 15 illustrates an example where a repeater chip 1500 is used as a replacement for the CPU 410 illustrated in FIG. 4;
FIG. 16 illustrates a relationship between the repeater chip 1500 illustrated in FIG. 15 and a CPU socket on which the repeater chip 1500 is mounted;
FIG. 17 illustrates an example where the repeater chip 1500 is used as a replacement for the CPU 410 illustrated in FIG. 12;
FIG. 18 illustrates an example where the repeater chip 1500 is used as a replacement for a CPU 420 illustrated in FIG. 12;
FIG. 19 illustrates a relationship between the repeater chip 1500 illustrated in FIGs. 17 and 18 and a CPU socket on which the repeater chip 1500 is mounted
FIG. 20 illustrates a configuration example of an extension chip 2000;
FIG. 21 illustrates a configuration example of a switch chip 2100; and
FIG. 22 illustrates a configuration example of a switch chip 2200.

### DESCRIPTION OF EMBODIMENTS

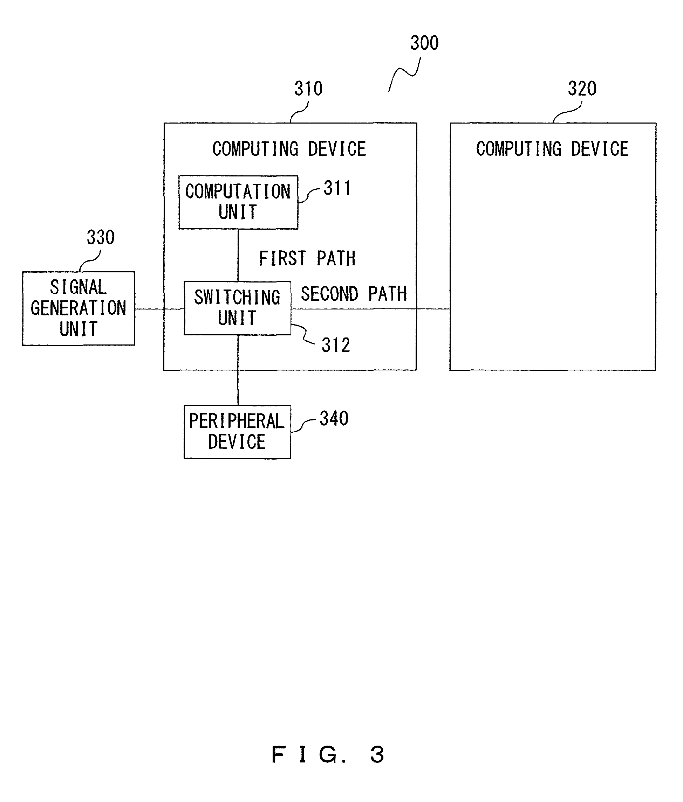

Embodiments are described below with reference to FIGs. 3-22. Note that the embodiments described below are merely examples, and not intended to preclude various modifications and technical applications, which are not explicitly recited below. Namely, the embodiments may be carried out by being various modified, for example, with a combination of the following techniques within a scope that does not depart from the gist of the embodiments.

FIG. 3 is an explanatory diagram of an information processing device 300 according to an embodiment.
The information processing device 300 includes a computing device 310, a computing device 320, and a signal generation unit 330.

The computing device 310 includes a computing unit 311 and a switching unit 312.
The computing unit 311 may include an arithmetic unit for performing a computation according to a specified program.

The switching unit 312 is a switching device configured to switch between first and second paths according to a switching signal generated by the signal generation unit 330. The first path is a path for connecting between a peripheral device 340 connected to the computing device 310 and the computing unit 311. The second path is a path for connecting between the peripheral device 340 connected to the computing device 310 and the computing device 320. The computing device 320 may use the peripheral device 340 connected to the computing device 310 via the second path.

The signal generation unit 330 generates a switching signal, and outputs the generated signal to the switching unit 312.
The computing device 310 is able to switch between the first path and the second path according to the switching signal generated by the signal generation unit 330. For example, if a fault occurs in the computing device 310, which is therefore disabled to run, the computing device 320 is able to continuously use the peripheral device 340 connected to the computing device 310 by switching from the first path to the second path even when the computing device 310 is disabled to run.

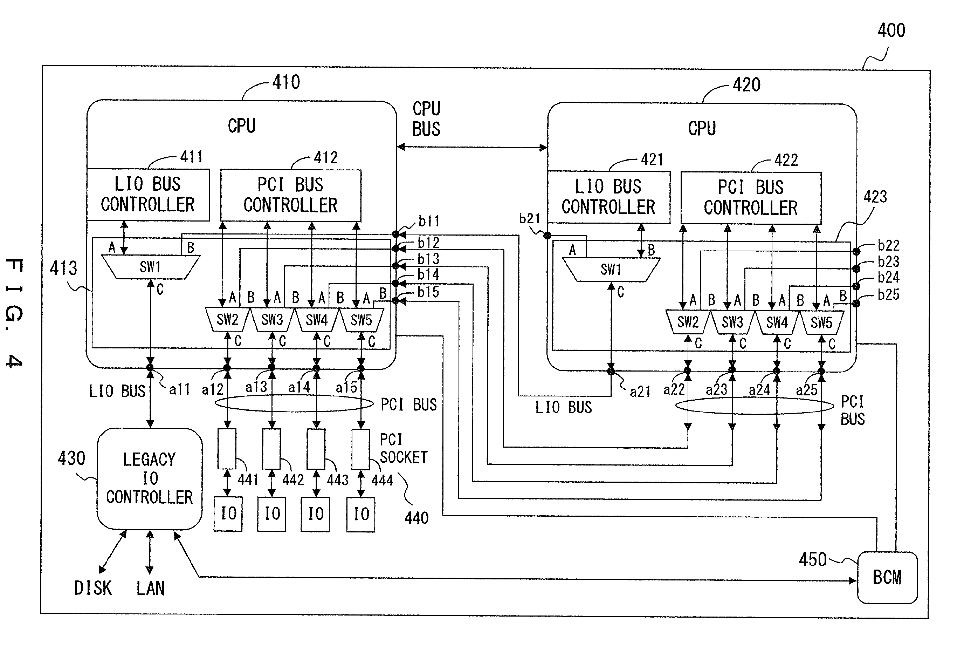

FIG. 4 is an explanatory diagram of a system board 400 included in the information processing device according to the embodiment.
The system board 400 includes CPUs 410 and 420, a legacy IO controller 430, a PCI socket 440, and a BCM 450. The CPUs 410 and 420 are connected by a CPU bus. Moreover, the CPUs 410 and 420 are interconnected by a LIO bus and a PCI bus.

The CPU 410 includes a LIO bus controller 411, a PCI bus controller 412, and a switch 413. Moreover, the CPU 420 includes a LIO bus controller 421, a PCI bus controller 422, and a switch 423. The LIO bus controller 421, the PCI bus controller 422, and the switch 423 are devices identical to the LIO bus controller 411, the PCI bus controller 412, and the switch 413. Therefore, the CPU 410 is described as an example.

The CPU 410 includes terminals a11, a12, a13, a14, and a15, and terminals b11, b12, b13, b14, and b15. The terminal a11 connects to a terminal C of the switch SW 1. Moreover, each of the terminals a12, a13, a14, and a15 connects to a terminal C of the switches SW2-5. The terminal b11 connects to a switching terminal B of the switch SW1. Moreover, each of the terminals b12, b13, b14, and b15 connects to a switching terminal B of the switches SW2-5.

The LIO bus controller 411 is a controller configured to control a data transfer performed by a LIO bus that connects between the LIO bus controller 411 and the legacy IO controller 430.
The PCI bus controller 412 is an interface device configured to support a connection to a peripheral device, such as an IO device, using PCI, which is a bus standard stipulated by PCI SIG (Special Interest Group).

The switch 413 includes the switches SW1, SW2, SW3, SW4, and SW5.
The switch SW1 includes switching terminals A and B. The switching terminal A connects to the LIO bus controller 411. The switching terminal B connects to the terminal b11 connected to a PCI bus of the CPU 420. Moreover, the switch SW1 connects to the terminal a11 connected to the legacy IO controller 430.

The switch SW1 is able to switch between the LIO bus for connecting between the LIO bus controller 411 and the legacy IO controller 430, and the bus for connecting between the switch SW1 of the CPU 420 and the legacy IO controller 430 by selecting the switching terminal A or B.

The switch SW2 includes switching terminals A and B. The switching terminal A connects to the PCI bus controller 412. The switching terminal B connects to the terminal b12 connected to the PCI bus of the CPU 420. Moreover, the switch SW2 connects to a PCI socket 441.

The switch SW2 is able to switch between a PCI bus for connecting a PCI bus for connecting between the PCI bus controller 412 and the PCI socket 441, and a bus for connecting between the switch SW2 of the CPU 420 and the PCI socket 441 by selecting the switching terminal A or B.

Similarly, the switches SW3-5 include switching terminals A and B. The switching terminal A of the switches SW3-5 connects to the PCI bus controller 412. The switching terminal B of the switches SW3-5 connects to each of the terminals b13, b14, and b15, which are connected to the PCI bus of the CPU 420. Moreover, the switches SW3-5 respectively connect to PCI sockets 442 443, and 444.

The switches SW3-5 is able to switch between the PCI bus for connecting the PCI bus controller and the PCI socket, and a bus for connecting the switch SW of the CPU 420 and the PCI socket by selecting the switching terminal A or B.

The legacy IO controller 430 is an interface device configured to connect to a peripheral device using a conventionally used device, a so-called legacy IO device. The legacy IO controller 430 is a controller configured to support, for example, SCSI (Small Computer System Interface) used to connect to a magnetic disk device, IDE (Integrated Drive Electronics), Ethernet (registered trademark) used to connect to a LAN, and RS-232C (Recommend Standard 232 version C) used to connect to a device for making a serial communication. The legacy IO controller 430 connects to the LIO bus controller 411 within the CPU 410 via a LIO bus including the switch SW1.

The PCI socket 440 is a socket configured to connect to an IO device. The PCI socket 440 connects to the PCI bus controller 412 via a PCI bus including the switches SW2-5. FIG. 4 illustrates an example of a case where the PCI socket 440 is composed of four PCI sockets 441, 442, 443, and 444. The PCI sockets 441, 442, 443, and 444 respectively connect to the switches SW2, SW3, SW4, and SW5 via the PCI bus.

The BCM 450 connects to devices, such as the CPU 410, the CPU 420, the legacy IO controller 430, and the like, mounted on the system board 400. The BCM 450 manages the devices mounted on the system board 400. For example, upon receipt of an error notification from the CPU 410, the BCM 450 reads content of the notified error from the CPU 410. Then, the BCM 450 degenerates the CPU 410 if the BCM 450 determines that the error is fatal. The BCM 450 asserts a reset signal for the CPU 410, so that this degeneration is performed.

The system board 400 has been described above by taking, as the example, the system board where the two CPUs such as the CPU 410 and the CPU 420 are mounted. However, the number of CPUs mounted on the system board 400 is not limited.

Additionally, the CPU 410 has been described by taking, as the example, the case where the two bus controllers, namely, the LIO bus controller 411 and the PCI bus controller 412 are included. However, the number and types of bus controllers included in the CPU 410 are not limited. For example, the CPU 410 may include only the LIO bus controller 411, or only the PCI bus controller 412.

Furthermore, the case where the four switches SW2 to SW5 are included as the switches for connecting to the PCI bus controller 412 has been described as the example. However, the number of switches is not limited as a matter of course.

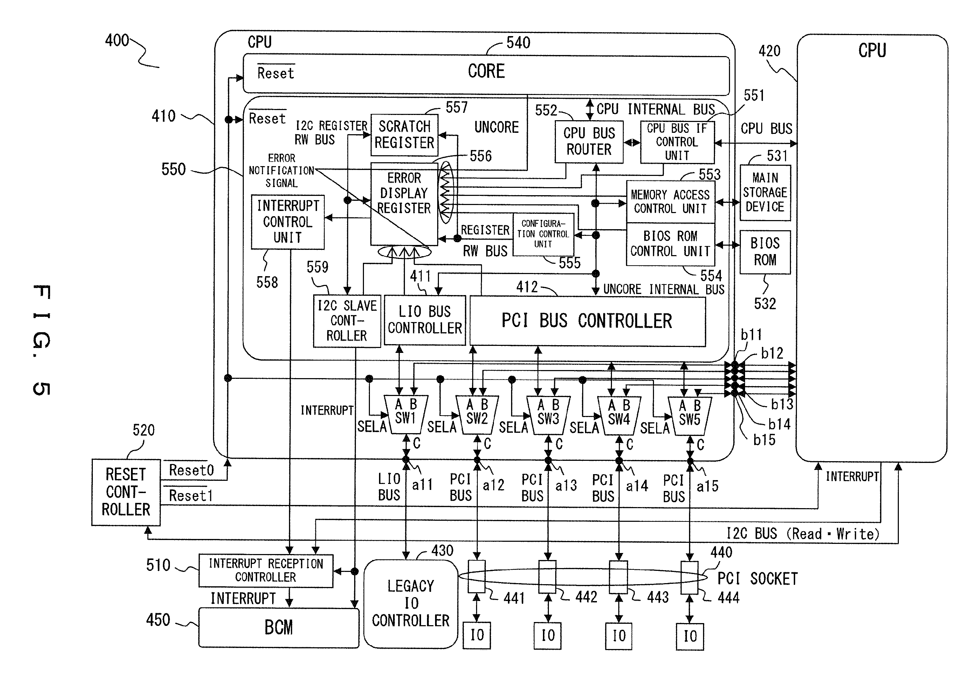

FIG. 5 illustrates a specific example of the system board 400 illustrated in FIG. 4. Since the CPU 420 has a configuration similar to that of the CPU 410, a specific description of the inside of the CPU 420 is omitted in FIG. 5.

The system board 400 includes the CPUs 410 and 420, the legacy IO controller 430, the PCI socket 440, and the BCM 450. The system board 400 further includes an interrupt reception controller 510, a reset controller 520, a main storage device 531, and BIOS (Basic Input/Output System) ROM (Read Only Memory) 532.

Upon receipt of an interrupt signal from the CPU 410 or the CPU 420, the interrupt reception controller 510 notifies the BCM 450 that the interrupt signal has been received from the CPU 410 or the CPU 420.

The reset controller 520 asserts a reset signal for the CPU 410 or the CPU 420 according to an instruction from the BCM 450. In this embodiment, a state where the reset signal is asserted is a state where the reset signal /Reset0 or /Reset1 illustrated in FIG. 5 is held to be "0".

The main storage device 531 is a main storage device for storing a program, BIOS, and the like, which are executed by the CPU 410.
The BIOS ROM 532 is a nonvolatile memory for storing a program group, namely, BIOS, for controlling peripheral devices such as a magnetic disk device and the like, which are connected to the CPU 410.

The CPU 410 includes a core 540, an uncore 550, and switches SW1 to SW5.
The core 540 includes a computing device for reading the program stored in the main storage device 531, and for executing instructions according to the read program. Moreover, the core 540 is able to include a primary cache memory directly connected to the computing device, and other components. The primary cache memory is able to temporarily store part or the whole of the program read from the main storage device 531, and data needed for computations.

The core 540 suspends its operation while the reset signal transmitted from the reset signal controller 520 is being asserted. When the reset signal is released from being asserted, the core 540 starts its operation.

The uncore 550 includes a CPU bus router 551, a CPU bus IF control unit 552, a memory access control unit 553, a BIOS ROM control unit 554, and a configuration control unit 555. The uncore 550 further includes an error display register 556, a scratch register 557, an interrupt control unit 558, and an I2C (Inter Integrated Circuit) slave controller 559. The uncore 550 further includes the LIO bus controller 411 and the PCI bus controller 412. The I2C slave controller is also included in the interrupt reception controller 510 and the reset controller 520 although this is not illustrated. Moreover, an I2C master controller, a counterpart of the I2C slave controller, is included in the BCM 450.

The uncore 550 suspends its operation while the reset signal transmitted from the reset signal controller 520 is being asserted. When the reset signal is released from being asserted, the core 540 starts its operation.

The CPU bus IF control unit 551 is a controller configured to control a data transfer performed by the CPU bus that connects between the CPU 410 and the CPU 420. The CPU bus IF control unit 551 includes an error detection circuit configured to detect an error of a data transfer process and the like. When this error detection circuit detects an error, the CPU bus IF control unit 551 stores error information of the detected error in the error display register 556.

The CPU bus router 552 connects to the core 540, the CPU bus IF control unit 551, the memory access control unit 553, the LIO bus controller 411, the PCI bus controller 412, and the like. The CPU bus router 552 transfers data transmitted from the core 540, the CPU bus IF control unit 551, the memory access control unit 553, the LIO bus controller 411, the PCI bus controller 412, and the like to a specified destination. The CPU bus router 552 includes an error detection circuit configured to detect an error in a data routing process. When this error detection circuit detects an error, the CPU bus router 552 stores error information of the detected error in the error display register 556.

The memory access control unit 553 is an interface device configured to execute a data read/write process from/to the main storage device 531. The memory access control unit 553 includes an error detection circuit configured to detect an error in the data read/write process from/to the main storage device 531. When this error detection circuit detects an error, the memory access control unit 553 stores error information of the detected error in the error display register 556.

The BIOS ROM control unit 554 is an interface device configured to execute processes such as a process for reading BIOS from the BIOS ROM 532, a process for loading the read BIOS into the main storage device 531 via the memory access control unit 553, and other processes. The BIOS ROM control unit 554 includes an error detection circuit configured to detect an error in a read process and the like of BIOS. When this error detection circuit detects an error, the BIOS ROM control unit 554 stores error information of the detected error in the error display register 556.

The configuration control unit 555 executes processes such as a process for checking a peripheral device and the like connected to the CPU 410, a process for notifying the CPU 410 of a device configuration available to the CPU 410, and other processes. The configuration control unit 555 includes an error detection circuit for detecting an error of a peripheral device and the like. When this error detection circuit detects an error, the configuration control unit 555 stores error information of the detected error in the error display register 556.

The error display register 556 connects to the core 540, the CPU bus IF control unit 551, the CPU bus router 552, the memory access control unit 553, the BIOS ROM control unit 554, the configuration control unit 555, and the I2C slave controller 559. Moreover, the error display register 556 connects to the LIO bus controller 411 and the PCI bus controller 412. Error information of an error detected within these devices is written to a register included in the error display register 556. When the error information is written, the error display register 556 notifies the interrupt control unit 558 that the error has been detected.

The scratch register 557 is a register configured to temporarily store data used for an I2C communication.
Upon receipt of a notification of error detection from the error display register 556, the interrupt control unit 558 outputs an interrupt signal to the interrupt reception controller 510.

The I2C slave controller 559 is an interface device configured to make an I2C communication with the BCM 450. The I2C slave controller 559 makes an I2C communication with an I2C master controller that is included in the BCM 450 and not illustrated. For example, upon receipt of a request of error information stored in the error display register 556 from the BCM 450, the I2C slave controller 559 reads the requested error information from the error display register 556, and transmits the read information to the BCM 450.

The interrupt reception controller 510 respectively stores the interrupt signal transmitted from the CPU 410, and that transmitted from the CPU 420 in a register. Upon receipt of the interrupt signal from the CPU 410 or the CPU 420, the interrupt reception controller 510 notifies the BCM 450 that the interrupt has been inserted from the CPU. Also this notification is enabled with an interrupt process for the BCM 450.

Upon receipt of the notification indicating that the interrupt has been inserted from the interrupt reception controller 510, the BCM 450 makes an I2C communication with the interrupt reception controller 510. Then, the BCM 450 reads the value of the register, included in the interrupt reception controller 510, for storing the interrupt signal, and identifies a CPU that has inserted the interrupt. Then, the BCM 450 issues a request of error information to the I2C slave controller 559 of the CPU that has inserted the interrupt, the CPU 0 in this description.

Upon receipt of the request of the error information, the I2C slave controller 559 reads the error information from the error display register 556, and transmits the read information to the BCM 450. The BCM 450 determines the degree of importance of the error based on the received error information. If the BCM 450 determines that the error is a fatal error that disables the CPU to continuously run, the BCM 450 degenerates the CPU that has inserted the interrupt. Specifically, the BCM 450 reboots the information processing device, and executes a degeneration process for the CPU at the reboot. With this degeneration process, the BCM 450 instructs the reset signal controller 520 to assert a reset signal for the CPU to be degenerated. Thereafter, the reset signal controller 520 holds the state where the reset signal for the CPU to be degenerated is being asserted.

There may be cases where an error of a CPU is unable to be detected with an interrupt process as described above. These are, for example, cases where the BIOS ROM 532 is destroyed or an undetectable fault occurs within a CPU. In such cases, a CPU where an error occurs is able to be detected as follows.

Upon completion of bootup of BIOS read from the BIOS ROM 532 at the bootup of the system, the configuration control unit 555 stores a bootup completion flag in the scratch register 557. The BCM 450 verifies the bootup completion flag in the scratch register via the I2C slave controller 559 after a specified duration elapses from the release of the reset signal from being asserted. If the bootup completion flag is not set in the scratch register 557, it may be determined that the bootup of the system has failed.

When the reset signal controller 520 asserts a reset signal for the CPU to be degenerated, namely, when the reset signal output from the reset controller 520 switches from "1" to "0", a switching terminal of the switch SW1 to which the reset signal is input switches from A to B.

The switching terminal A of the switch SW1 is connected to the LIO bus controller 411, whereas the switching terminal B is connected to the LIO bus of the CPU 420. Accordingly, when the reset signal is asserted, the switch SW1 switches from the bus for connecting between the LIO bus controller 411 and the legacy IO controller 430 to the bus for connecting between the LIO bus of the CPU 420 and the legacy IO controller 430.

Additionally, the switching terminal A of the switch SW2 is connected to the PCI bus controller 412, whereas the switching terminal B is connected to the PCI socket 441. Accordingly, when the reset signal is asserted, the switch SW2 switches from the bus for connecting between the PCI bus controller 412 and the PCI socket 441 to the bus for connecting between the PCI bus of the CPU 420 and the PCI socket 441.

Similarly, the switching terminal A of the switches SW3, SW4, SW5 is connected to the PCI bus controller, whereas the switching terminal B is connected to the PCI socket. Accordingly, when the reset signal is asserted, the switch SW switches from the bus for connecting between the PCI bus controller and the PCI socket to the bus for connecting between the PCI bus of the CPU 420 and the PCI socket.

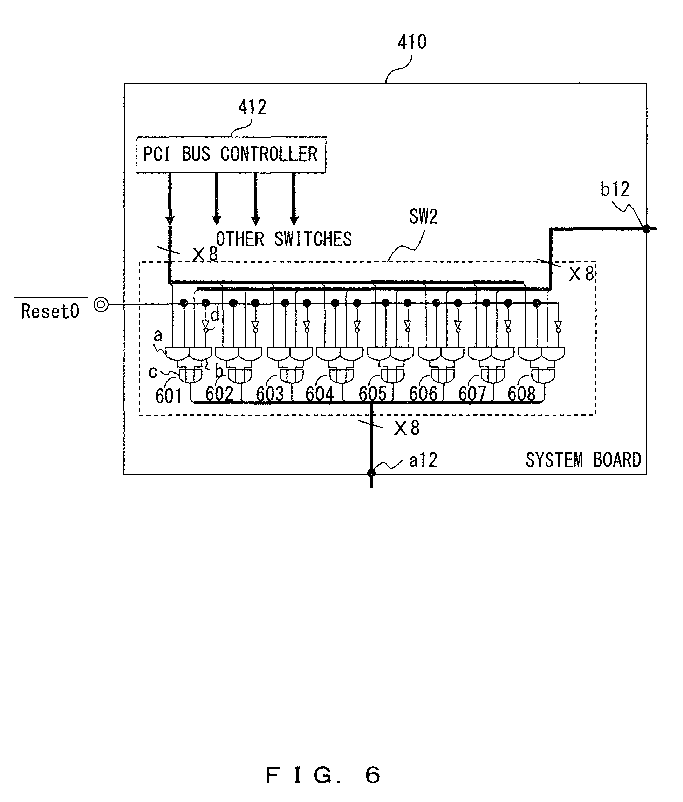

FIG. 6 illustrates a specific configuration example of the switches SW1, SW2, SW3, SW4, and SW5, which are illustrated in FIG. 4. In this example, the switches SW1, SW2, SW3, SW4, and SW5, which have the same configuration, are adopted. The switch SW2 is described on behalf of the switches as follows.

The switch SW2 includes switches 601-608. The number of switches included in the switch SW2 depends on a data width of a bus using the switch SW2. Since the switch SW2 is used as a PCI bus having an 8-bit width in this example, the eight switches 601-608 are used.

The switch 601 includes AND circuits a and b, an OR circuit c, and a NOT circuit d.
To an input end of the AND circuit a, a reset signal line from the reset signal controller 520, and one signal line included in a PCI bus for connecting to the PCI bus controller 412 are connected. Moreover, to an input end of the AND circuit b, an output end of the NOT circuit d, and one signal line included in a bus for connecting to the PCI bus of the CPU 420 are connected. To an input end of the NOT circuit d, a reset signal line from the reset signal controller 520 is connected.

To an input end of the OR circuit c, an output end of the AND circuit a, and an output end of the AND circuit b are connected. Moreover, an output end of the OR circuit c is connected to one signal line included in the PCI bus for connecting to the PCI socket 442.

When the reset signal "0" is input to the switch 601 in the above described configuration, the reset signal "0" is input to the AND circuit a. In this case, the AND circuit a outputs "0" regardless of the signal transmitted from the signal line included in the PCI bus.

Additionally, when the reset signal "0" is input to the switch 601, a signal "1" inverted by the NOT circuit d is input to the AND circuit b. In this case, the AND circuit b outputs a signal transmitted from a signal line included in the bus for connecting to the PCI bus of the CPU 420.

The OR circuit c outputs a logical OR between the output signal of the AND circuit a and that of the AND circuit b. Accordingly, when the reset signal "0" is input to the switch 601, the switch 601 outputs a signal transmitted from a signal line included in the bus for connecting to the PCI bus of the CPU 420.

In contrast, when the reset signal "1" is input to the switch 601, the reset signal "1" is input to the AND circuit a. In this case, the AND circuit a outputs a signal transmitted from the signal line included in the PCI bus.

Alternatively, when the reset signal "1" is input to the switch 601, a signal "0" inverted by the NOT circuit d is input to the AND circuit b. In this case, the AND circuit b outputs "0" regardless of the signal transmitted from the reset signal line included in the bus for connecting to the PCI bus of the CPU 420.

The OR circuit c outputs a logical OR between the output signal of the AND circuit a and that of the AND circuit b. Accordingly, when the reset signal "1" is input to the switch 601, the switch 601 outputs a signal transmitted from a signal line included in the PCI bus for connecting to the PCI bus controller 412.

Also the switches 602-608 have the same configuration as that of the switch 601. Accordingly, when the reset signal "0" is input, the switches 602-608 output a signal transmitted from a signal line included in the bus for connecting to the PCI bus of the CPU 420. Then, the switches 602-608 output a signal transmitted from a signal line included in the PCI bus for connecting to the PCI bus controller 412 when the reset signal "1" is input.

In this way, the switch SW2 is enabled to switch between the PCI bus for connecting between the PCI bus controller 412 and the PCI socket 441, and the bus for connecting between the switch SW2 of the CPU 420 and the PCI socket 441.

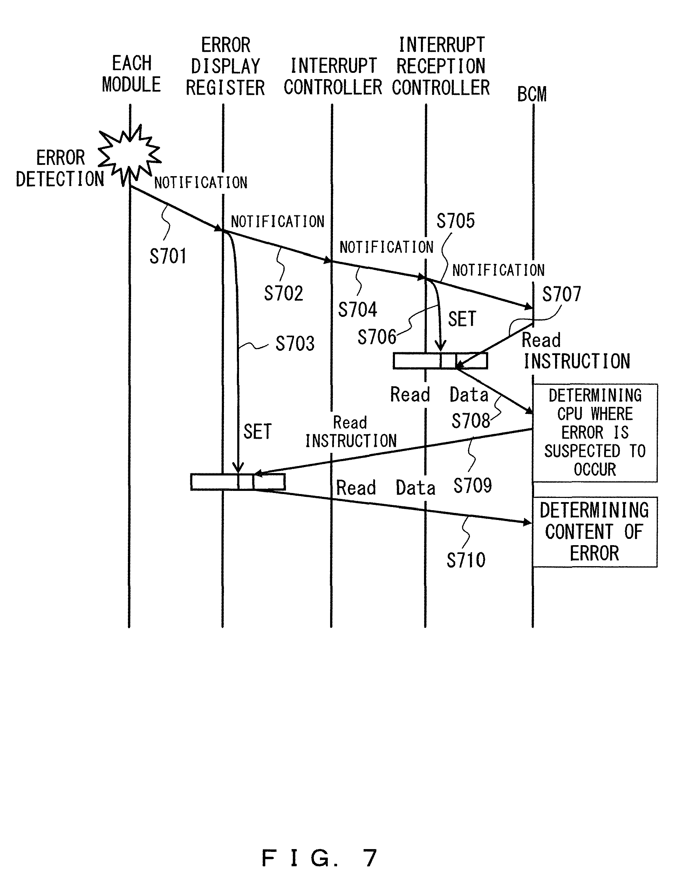

FIG. 7 is a flowchart illustrating an error detection process in the CPU 410 illustrated in FIG. 5.
As described above with reference to FIG. 5, modules included in the CPU 410, for example, the core 540, the LIO bus controller 411, and the PCI bus controller 412, which are included in the uncore 550, and the like include an error detection circuit. Each of the modules notifies the error display register 556 of information of an error when the error detection circuit included in the local module detects the error (step S701).

Upon receipt of the notification of the information of the error, the error display register 556 notifies the interrupt control unit 558 that the error has occurred (step S702). At the same time, the error display register 556 sets the notified error information in a register included in the error display register 556 (step 703).

Upon receipt of the notification of the error occurrence from the error display register 556, the interrupt control unit 558 notifies the interrupt reception controller 510 of the occurrence of the error (step S704).
Upon receipt of the notification of the occurrence of the error from the interrupt control unit 558, the interrupt reception controller 510 notifies the BCM 450 of the occurrence of the error (step S705). At the same time, the interrupt reception controller 510 stores information of the occurrence of the error for each CPU in a register included in the interrupt reception controller 510 (step S706).

Upon receipt of the notification of the occurrence of the error from the interrupt reception controller 510, the BCM 450 issues a Read instruction to the interrupt reception controller 510 (step S707), and reads the information of the occurrence of the error from the register included in the interrupt reception controller 510 (step S707). Then, the BCM 450 determines a CPU where the error is suspected to occur based on the read information of the occurrence of the error (step S708).

The BCM 450 issues a Read instruction to the error display register 556 of the CPU where the error is suspected to occur, for example, the error display register 556 (step S709), and reads error information set in the error display register 556 (step S710) . The BCM 450 determines content of the fault of the CPU based on the error information read from the error display register 556.

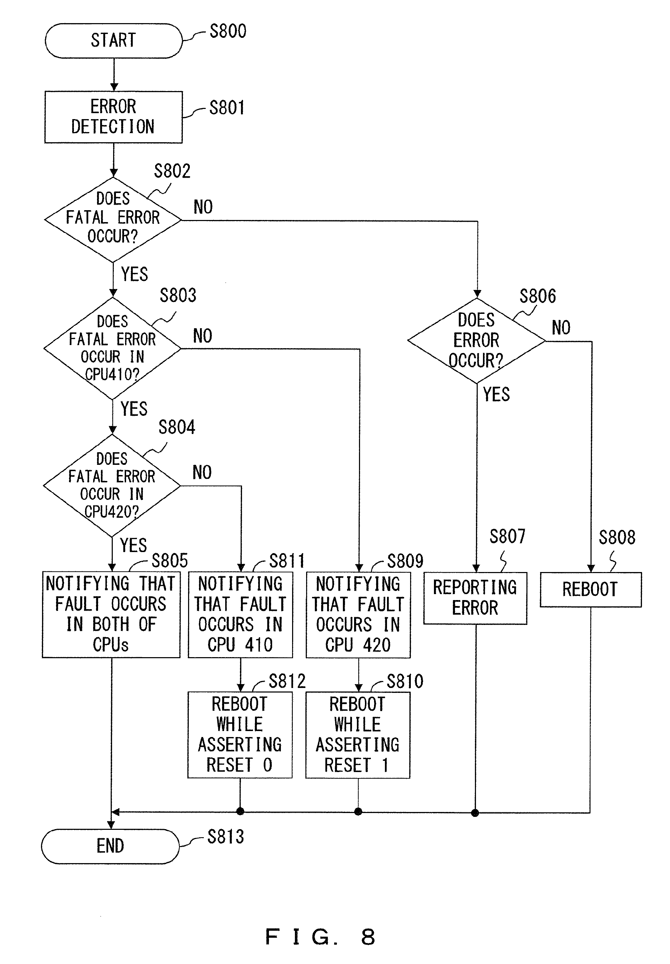

FIG. 8 is a flowchart illustrating the error detection process of the system board 400 according to this embodiment.
The system board 400 moves the process to step S802 upon detection of an error based on an error notification from the CPU mounted on the system board 400 (step S801).

In step S802, the BCM 450 determines whether or not a fatal error occurs based on error information after the BCM 340 obtains, with the process illustrated in FIG. 7, the error information from the error display register within the CPU where the error occurs. If the BCM 450 determines that the fatal error occurs ("YES" in step S802), the BCM 450 moves the process to step S803.

If the BCM 450 determines that the fatal error occurs in both of the CPUs 410 and 420 ("YES" in step S803 and "YES" in step S804), the BCM 450 moves the process to step S805. In this case, the BCM 450 notifies a predetermined device that the fault occurs in both of the CPUs 410 and 420 by using specified communication means without rebooting the system (step S805).

In contrast, if the BCM 450 determines that the fatal error occurs in neither the CPU 410 nor the CPU 420 ("NO" in step S802), the BCM 450 determines whether or not an error other than the fatal error occurs based on the error information. If the BCM 450 determines that the error other than the fatal error occurs ("YES" in step S806), the BCM 450 notifies a predetermined device that the error other than the fatal error occurs by using specified communication means (step S807).

Alternatively, if the BCM 450 determines that the error other than the fatal error does not occur ( "NO" in step S806), the BCM 450 reboots the system (step S808). The reboot of the system means a process for rebooting the system including the CPUs 410 and 420 mounted on the system board 400. The reboot includes processes such as a process for rebooting a program running on the CPUs 410 and 420, a process for resetting hardware including the CPUs 410 and 420 mounted on the system board 400, and other processes.

Alternatively, if the BCM 450 determines that no fatal error occurs in the CPU 410 ("NO" in step S803), the BCM 450 moves the process to step S809. In this case, the BCM 450 notifies a predetermined device that the fault occurs in the CPU 420 by using specified communication means (step S809). Then, the BCM 450 instructs the reset signal controller 520 to assert a reset signal (RESET 1) for the CPU 420. Next, the BCM 450 reboots the system while asserting the reset signal (RESET 1) for the CPU 420 (step S810).

Alternatively, if the BCM 450 determines that no fatal error occurs in the CPU 420 in step S804 ("NO" in step S804), the BCM 450 moves the process to step S811. In this case, the BCM 450 notifies a predetermined device that the fault occurs in the CPU 410 by using specified communication means (step S811). Then, the BCM 450 instructs the reset controller 520 to assert the reset signal (RESET 0) for the CPU 410. Then, the BCM 450 reboots the system while asserting the reset signal (RESET 0) for the CPU 410 (step S812).

Upon termination of the above described process, the BCM 450 terminates the error detection process (step S813).

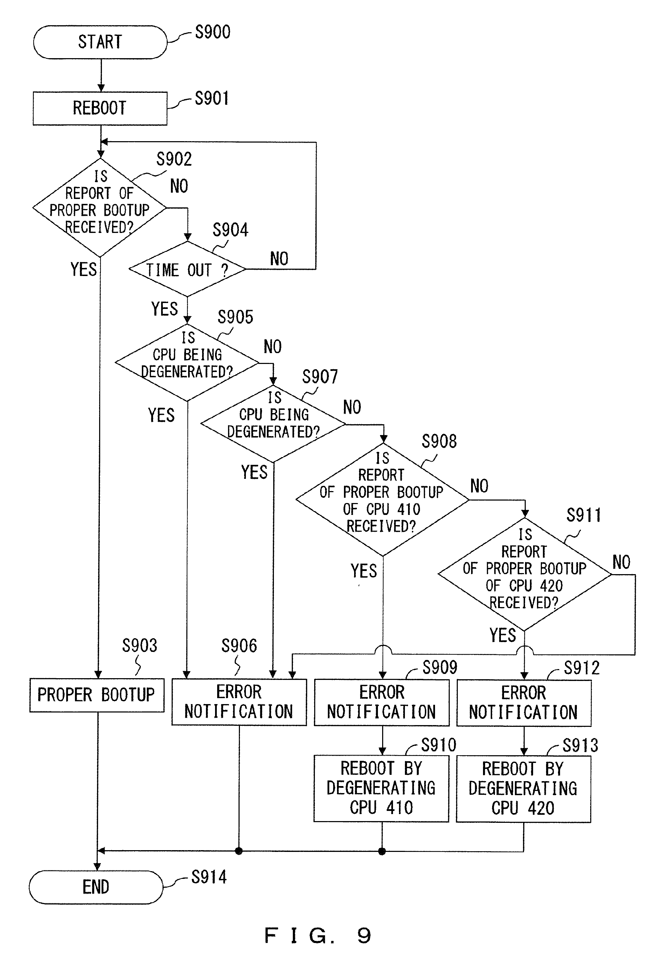

FIG. 9 is a flowchart illustrating the reboot process of the system board 400 according to this embodiment.
In step S901, when the reboot process starts to be executed, the BCM 450 moves the process to step S902. Then, upon receipt of a report notifying that a CPU has properly booted up from all CPUs (step S902), the BCM 450 determines that the system has properly booted up (step S903).

Note that the BCM 450 is able to receive the report notifying that the CPU has properly booted up, for example, by using an interrupt signal from an interrupt control unit included in each CPU, for example, the interrupt control unit 558 of the CPU 410. For instance, an interrupt signal from the interrupt control unit included in each CPU is stored for each CPU in the interrupt reception controller 510. The BCM 450 may identify a CPU that has properly booted up by referencing the interrupt signal stored for each CPU in the interrupt reception controller 510.

Alternatively, if a CPU that has not transmitted a report notifying that the CPU has properly booted up is present ("NO" in step S902), the BCM 450 moves the process to step S904. In this case, if elapsed time from the start of the reboot process until the current time is within a specified duration ("NO" in step S904), the BCM 450 moves the process to step S902.

Alternatively, if the elapsed time from the start of the reboot process until the current time exceeds the specified duration ("YES" in step S904), the BCM 450 determines that the reboot process times out, and moves the process to step S905. In this case, if the CPU 410 is being degenerated ("YES" in step S905), the BCM 450 issues an error notification indicating that the CPU 410 is being degenerated to a predetermined device by using specified communication means (step S906).

When the reset signal output from the reset controller 520 to the CPU 410 is asserted, the BCM 450 may determine that the CPU 410 is being degenerated. Similarly, the BCM 450 may determine that the CPU 420 is being degenerated when the reset signal output from the reset controller 520 to the CPU 420 is asserted.

If the CPU 410 is not being degenerated in step S905 ("NO in step S905), the BCM 450 moves the process to step S907. In this case, if the CPU 420 is being degenerated ("YES" in step S907), the BCM 450 issues an error notification indicating that the CPU 420 is being degenerated to a predetermined device by using specified communication means (step S906).

Alternatively, if the CPU 420 is not being degenerated in step S907 ("NO" in step S907), the BCM 450 moves the process to step S908. In this case, if the BCM 450 receives, from the CPU 420, a report notifying that the CPU has properly booted up ("YES" in step S908), the BCM 450 issues an error notification indicating that only the CPU 420 has been properly booted up to a predetermined device by using specified communication means (step S909). Then, the BCM 450 reboots the system by degenerating the CPU 410, namely, while asserting the reset signal (RESET 0) for the CPU 410 (step S910).

Alternatively, if the BCM 450 dos not receive, from the CPU 420, the report notifying that the CPU has properly booted up ("NO" in step S908), the BCM 450 moves the process to step S911. In this case, if the BCM 450 receives, from the CPU 410, the report notifying that the CPU has properly booted up ("YES" in step S911), the BCM 450 issues an error notification indicating that only the CPU 410 has properly booted up to a predetermined device by using specified communication means (step S912). Then, the BCM 450 reboots the system by degenerating the CPU 420, namely, while asserting the reset signal (RESET 1) for the CPU 420 (step S913).

If the BCM 450 does not receive, from the CPU 410, the report notifying that the CPU has properly booted up in step S911 ("NO" in step S911), the BCM 450 moves the process to step S906.

Upon termination of the above described process, the BCM 450 terminates the reboot process (step S914).

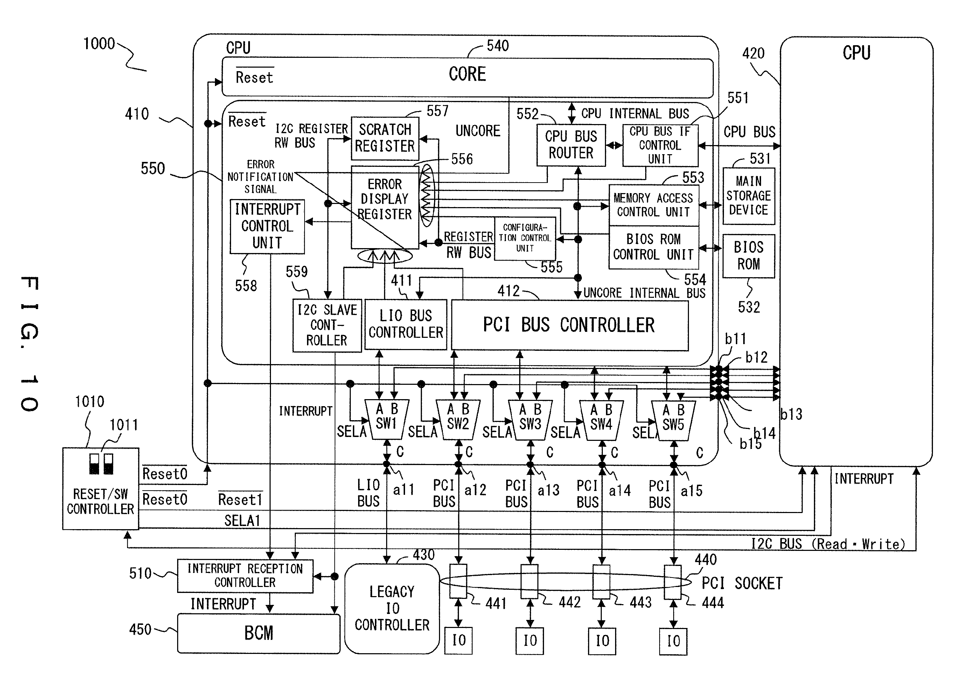

FIG. 10 illustrates a modification example of the system board 400 illustrated in FIG. 5.
The system board 1000 illustrated in FIG. 10 includes a reset/SW controller 1010 as a replacement for the reset signal controller 520.
The reset/SW controller 1010 connects to a core and an uncore, which are included in the CPUs 410 and 420, for example, the core 540 and the uncore 550, which are included in the CPU 410. The reset/SW controller 1010 asserts the reset signal for the CPU 410 or 420 according to an instruction from the BCM 450.

Additionally, the reset/SW controller 1010 is provided with an external SW 1011 for each CPU. The reset/SW controller 1010 connects to an input terminal SELA of the switches SW1-5 within the CPU. For example, when a user turns on the external SW 1011 of the CPU 410, which is provided in the reset/SW controller 1010, the reset/SW controller 1010 outputs a signal for selecting the switching terminal A of the switches SW1-5, namely, "1" to the input terminal SELA of the switches SW1-5. Alternatively, when the user turns off the external SW 1011 of the CPU 410, which is provided in the reset/SW controller 1010, the reset/SW controller 1010 outputs a signal for selecting the switching terminal B of the switches SW1-5, namely, "0" to the input terminal SELA of the switches SW1-5.

As described above, the system board 1000 illustrated in FIG. 10 is able to switch among the switches SW1-5 of the CPUs 410 and 420 at any time if needed by using the external SW 1011 provided in the reset/SW controller 1010.

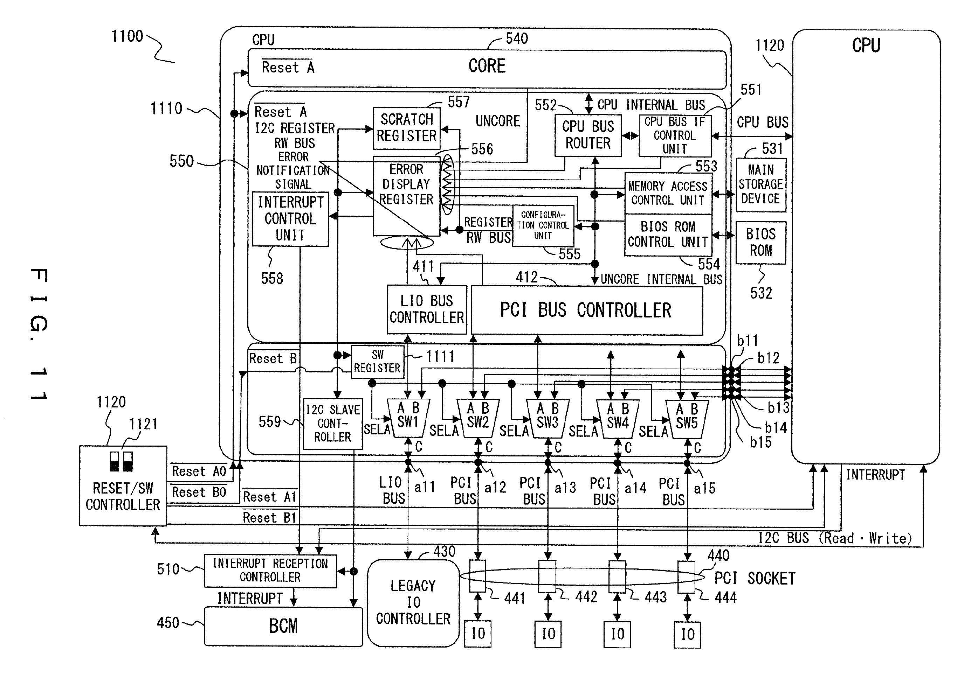

FIG. 11 illustrates a modification example of the system board 400 illustrated in FIG. 11.
The system board 1100 illustrated in FIG. 11 includes a SW register 1111 connected to the input terminal SELA of the switches SW1-5. The SW register 1111 holds a value of an input signal, such as "0" or "1", to the input terminal SELA of the switches SW1-5.

The SW register 1111 is connected to the I2C slave controller 559. The value of the SW register 111 is enabled to be set from the BCM 450. Namely, the BCM 450 is able to switch among the switches SW1-5.

Additionally, the SW register 111 connects to an output terminal "/Reset B0" for outputting a reset signal of the reset/SW controller 1120. When the reset/SW controller 1120 asserts the reset signal, a value for selecting the switching terminal B of the switches SW1-5, namely, "0" is set in the SW register 111. Alternatively, if the reset/SW controller 1120 releases the reset signal from being asserted, a value for selecting the switching terminal A of the switches SW1-5, namely, "1" is set in the SW register 111.

An output terminal "/Reset A0" for outputting the reset signal of the reset/SW controller 1120 connects to the core 540 and the uncore 550, which are included in the CPU 410. The reset/SW controller 1120 asserts the reset signal according to an instruction from the BCM 450. Moreover, the reset/SW controller 1120 is provided with an external SW 1121 for resetting the switches SW1-5 for each CPU. For example, when a user turns on the external SW 1121 of the CPU 410, which is provided in the reset/SW controller 1120, the reset/SW controller 1120 outputs a reset signal "0" from the output terminal "/Reset B0" to the SW register 111. In this case, since "0" is input to the input terminal SELA of the switches SW1-5, the switching terminal B is selected in the switches SW 1-5. Alternatively, when the user turns off the external SW 1121 of the CPU 410, which is provided in the reset/SW controller 1120, the reset/SW controller 1120 outputs a reset signal "1" from the output terminal "/Reset B0" to the SW register 111. Since "1" is input to the input terminal SELA of the switches SW1-5 in this case, the switching terminal A is selected in the switch SW 1-5.

As described above, the system board 1100 illustrated in FIG. 11 includes the SW register 1111 that connects to the input terminal SELA of the switches SW1-5 and the I2C slave controller 559. Therefore, the switches SW 1-5 are enabled to be switched by using an I2C communication from the BCM 450.

Additionally, the external SW provided in the reset/SW controller 1120 is an SW used only to reset the switches SW1-5. Therefore, external SWs may be prepared only by a number equivalent to that of CPUs mounted on the system board 1100. This eliminates the need for preparing external SWs by the number of switches SW1-5 included in each CPU like the external SW included in the reset/SW controller 1010 of the system board 1000. Accordingly, an area of a CPU chip is enabled to be decreased, thereby allowing the manufacturing cost and the size of the system board to be reduced.

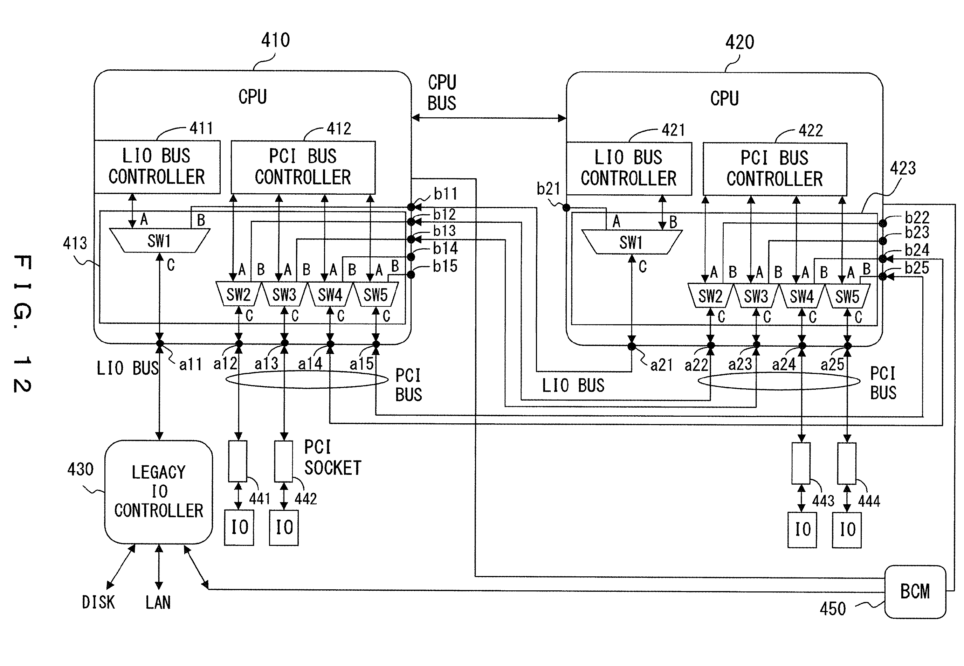

FIG. 12 illustrates an example of IO connections on the system board 400 illustrated in FIG. 4.
This is an example where PCI buses are used for each of the CPUs 410 and 420 in order to distribute a load imposed when the PCI buses are used on the system board 400 illustrated in FIG. 12.

To the terminal a11 of the CPU 410, the legacy IO controller 430 is connected. Moreover, to the terminals a12 and a13 of the CPU 410, the PCI sockets 441 and 442 are respectively connected. In the meantime, to terminals a24 and a25 of the CPU 420, the PCI sockets 443 and 444 are respectively connected.

The bus terminals a14 and a15 of the CPU 410 are respectively connected to terminals b24 and b25 of the CPU 420. Moreover, the terminal a21 of the CPU 420 is connected to the terminal b11 of the CPU 410. The terminals a22 and a23 of the CPU 420 are respectively connected to the terminals b12 and b13 of the CPU 410.

In the above described connection form, for example, a disk, a LAN and the like, which are connected to the legacy IO controller 430, are used by the CPU 410 in a normal state, namely, a state where both of the CPUs 410 and 420 are properly running. When a fault occurs in the CPU 410, the switch SW1 of the CPU 410 is switched with the processes described with reference to FIGs. 8 and 9. Therefore, the CPU 420 is able to use the disk, the LAN, and the like, which are connected to the legacy IO controller 430.

Similarly, IO devices connected to the PCI sockets 441 and 442 is used by the CPU 410 in the normal state. When a fault occurs in the CPU 410, the switches SW 2 and 3 of the CPU 410 are switched with the processes described with reference to FIGs. 8 and 9. Therefore, the CPU 420 is enabled to use the IO devices connected to the PCI sockets 441 and 442.

In contrast, IO devices connected to the PCI sockets 443 and 444 are used by the CPU 420 in the normal state. When a fault occurs in the CPU 420, the switches SW4 and SW5 of the CPU 420 are switched with the processes described with reference to FIGs. 8 and 9. As a result, the CPU 410 is enabled to use the IO devices connected to the PCI sockets 443 and 444.

In the connection example illustrated in FIG. 12, it is possible to distribute a load imposed when the PCI buses are used while the CPUs 410 and 420 are running. Even if a fault occurs in either of the CPUs 410 and 420, a CPU where the fault does not occur is enabled to use an IO device connected to the CPU where the fault occurs.

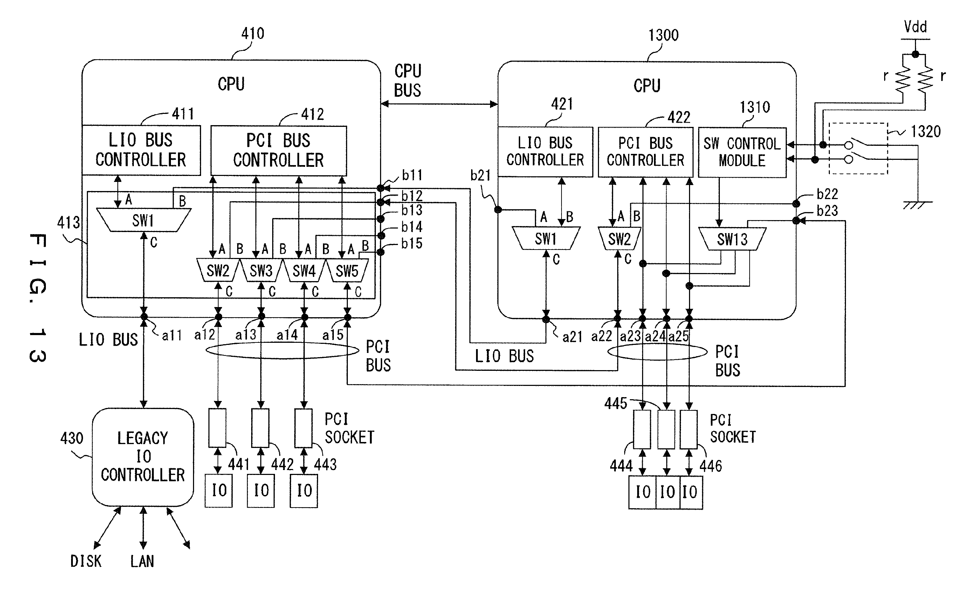

FIG. 13 illustrates a modification example of the CPU 410 illustrated in FIG. 4. In FIG. 13, a CPU 1300, which is a modification example of the CPU 410, is arranged at the position of the CPU 420 illustrated in FIG. 4 for convenience of an explanation.

The CPU 1300 includes a switch SW13 as a replacement for the switches SW3, SW4, and SW5, which are included in the CPU 410. The CPU 1300 further includes a SW control module 1310.

The switch SW 13 connects between the terminal b25 connected to the PCI bus of the other CPU, the CPU 410 in FIG. 13 and any one of PCI sockets 444, 445, and 446 according to a switching signal output from the SW control module 1310.

The SW control module 1310 generates the switching signal according to an input signal of the switch 1320. Then, the SW control module 1310 outputs the generated switching signal to the switch SW 13.

As the switch 1320, for example, a DIP switch or the like is available.
In the connection example illustrated in FIG. 13, both of the CPUs 410 and 420 use PCI buses by a number larger than one half of the number of PCI buses respectively connectable to the CPUs. In such a case, even if a fault occurs in the CPU 1300, which is disabled to run, the CPU 410 is enabled to use an IO device connected to the CPU 1300 by switching back the DIP switch as the switch 1320.

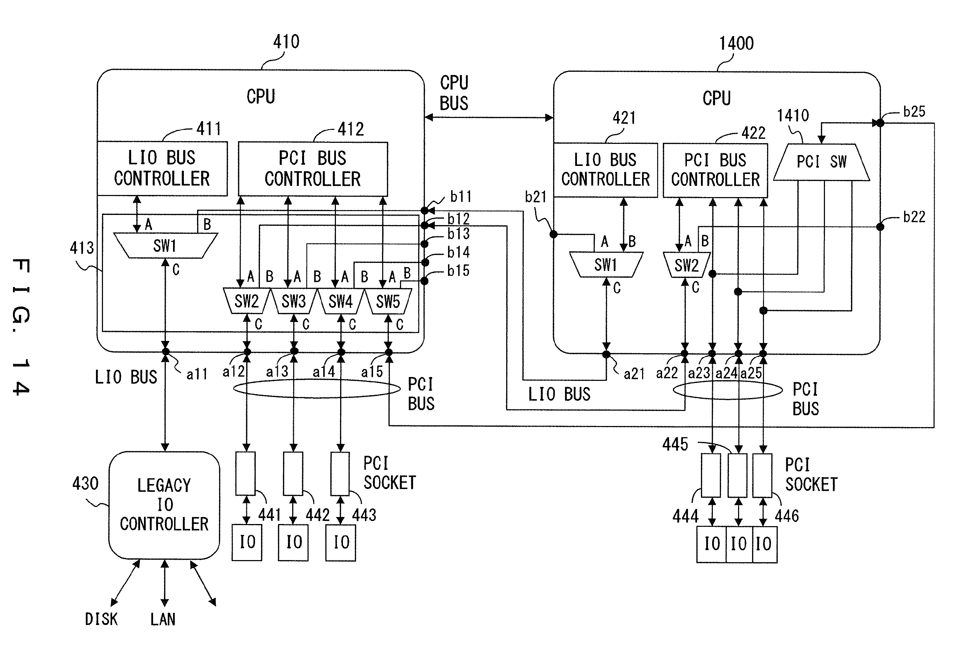

FIG. 14 illustrates a modification example of the CPU 410 illustrated in FIG. 4. In FIG. 14, a CPU 1400, which is a modification example of the CPU 410, is arranged at the position of the CPU 420 illustrated in FIG. 4 for convenience of an explanation.

The CPU 1400 includes a PCI SW 1410 as a replacement for the switches SW3, SW4, and SW5, which are included in the CPU 410. As the PCI SW 1410, for example, a PCI-express switch or the like is available.

In the connection example illustrated in FIG. 14, both of the CPUs 410 and 420 use PCI buses by a number larger than one half of the number of PCI buses respectively connectable to the CPUs. In such a case, even if a fault occurs in the CPU 1400, which is therefore disabled to run, the CPU 410 is enabled to use an IO device connected to the CPU 1400 via the PCI SW 1410.

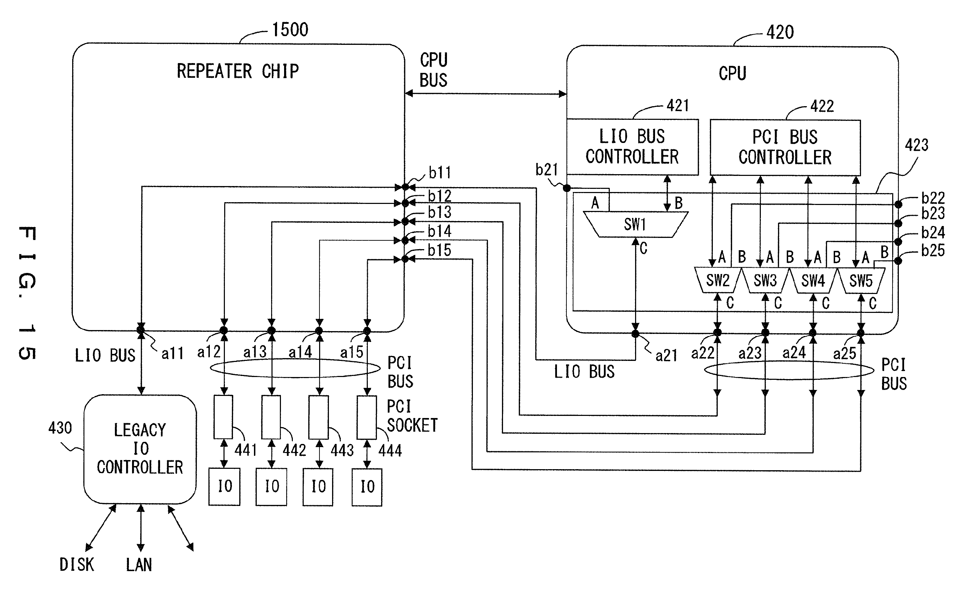

FIG. 15 illustrates an example where a repeater chip 1500 is used as a replacement for the CPU 410 illustrated in FIG. 4.
The repeater chip 1500 connects between the terminals a11 and b11, between the terminals a12 and b12, between the terminals a13 and b13, between the terminals a14 and b14, and between the terminals a15 and b15. When a fault occurs in the CPU 410 or the CPU 420, the repeater chip 1500 may be provided in a CPU socket, on which the CPU 410 or the CPU 420 is mounted, as a replacement for the CPU 410 or the CPU 420 where the fault occurs.

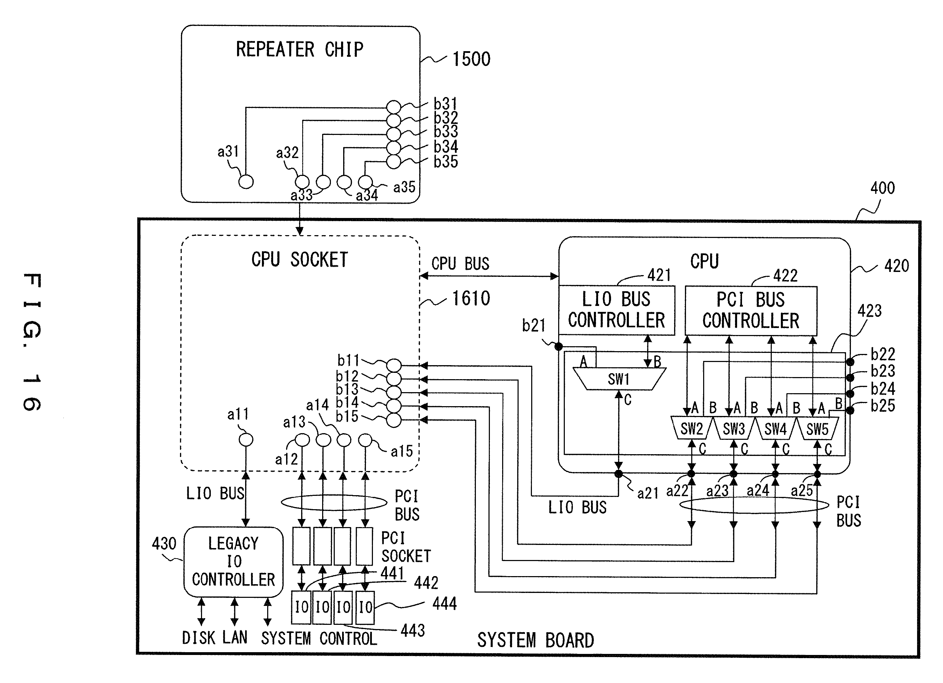

FIG. 16 illustrates a relationship between the repeater chip 1500 and the CPU socket on which the repeater chip 1500 is mounted.
The repeater chip 1500 includes circuits that respectively short-circuit between the terminals a31 and b31, between the terminals a32 and b32, between the terminals a33 and b33, between the terminals a34 and b34, and between the terminals a35 and b35.

When the repeater chip 1500 is mounted on the CPU socket 1610, the terminals a31, a32, a33, a34, and a35 of the repeater chip 1500 respectively connect to the terminals a11, a12, a13, a14, and a15 of the CPU socket 1610. Moreover, the terminals b31, b32, b33, b34, and b35 of the repeater chip 1500 respectively connect to the terminals b11, b12, b13, b14, and b15 of the CPU socket 1610.

As a result, the repeater chip 1500 is enabled to connect between the terminals a11 and b11, between the terminals a12 and b12, between the terminals a13 and b13, between the terminals a14 and b14, and between the terminals a15 and b15.

When a fault occurs in the CPU 410, the CPU 420 is enabled to use IO devices connected to the CPU 410, for example, a disk and a LAN, which are connected to the legacy IO controller 430, and IO devices connected to PCI sockets by replacing the CPU 410 with the repeater chip 1500.

In the following explanation, it is assumed that the terminals a31, a32, a33, a34, and a35 are terminals connecting to the terminals a11, a12, a13, a14, and a15 of the CPU socket 1610, or terminals connecting to the terminals a21, a22, a23, a24, and a25 of a socket 1620 to be described later. It is also assumed that the terminals b31, b32, b33, b34, and b35 are terminals connecting to the terminals b11, b12, b13, b14, and b15 of the CPU socket 1610, or terminals connecting to the terminals b21, b22, b23, b24, and b25 of the socket 1620.

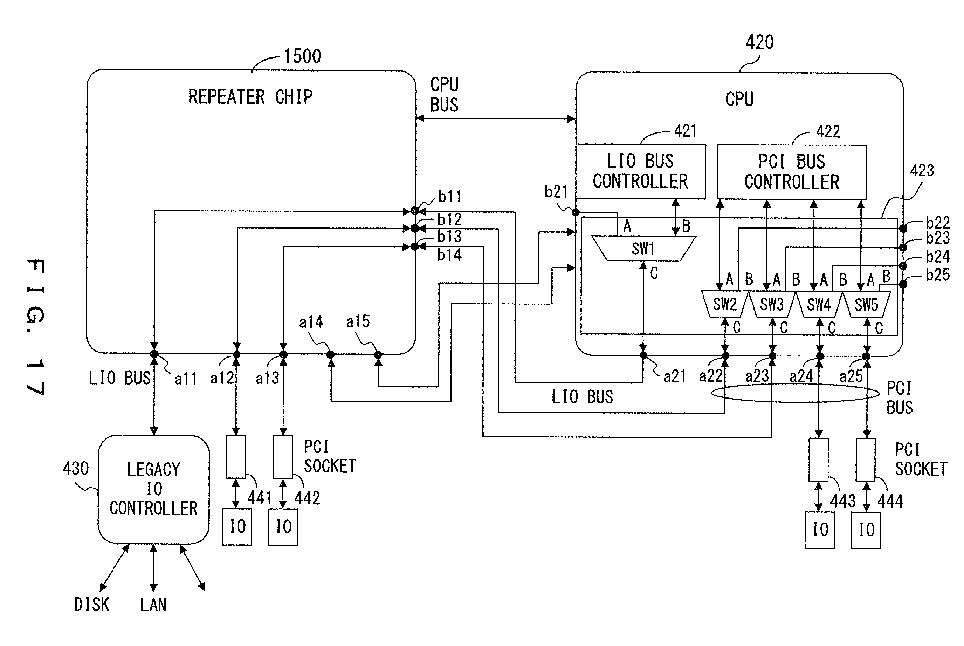

FIG. 17 illustrates an example where the repeater chip 1500 is used as a replacement for the CPU 410 illustrated in FIG. 12. In this case, the repeater chip 1500 connects between the terminals a11 and b11, between the terminals a12 and b12, and between the terminals a13 and b13.

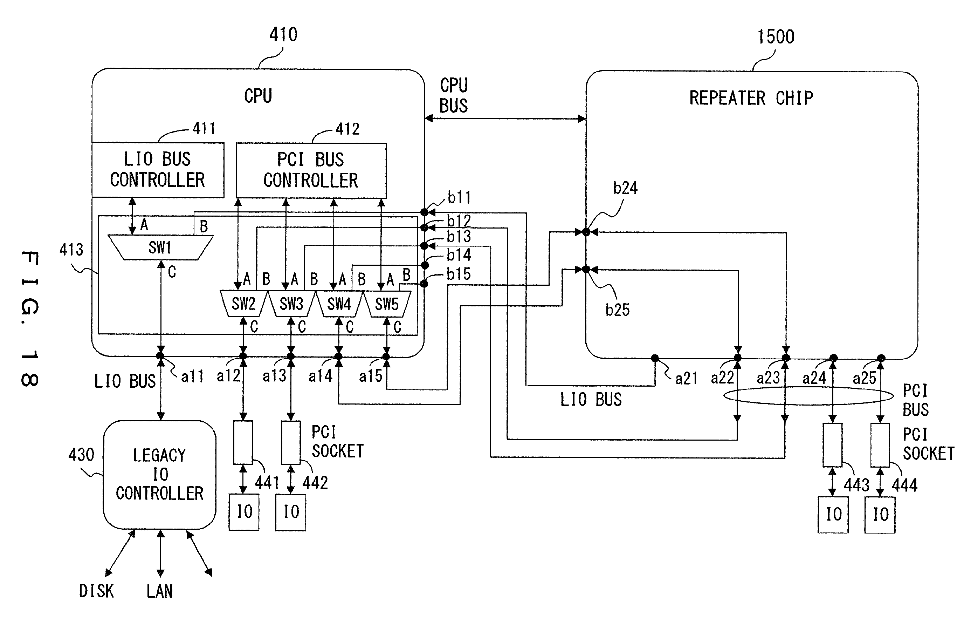

FIG. 18 illustrates an example where the repeater chip 1500 is used as a replacement for the CPU 420 illustrated in FIG. 12. In this case, the repeater chip 1500 connects between the terminals a24 and b24, and between the terminals a25 and b25.

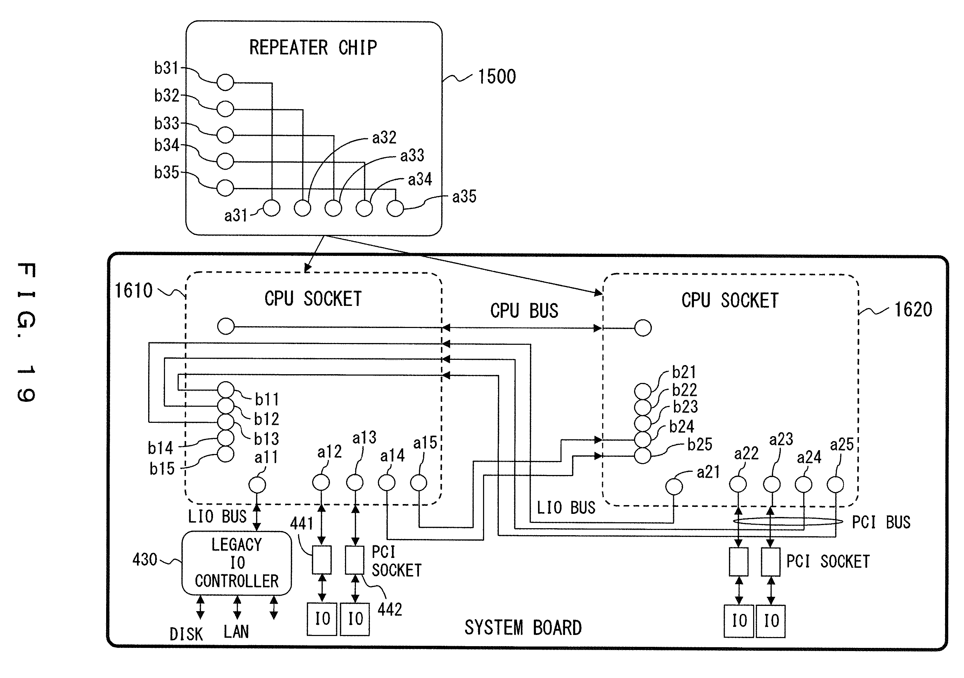

FIG. 19 illustrates a relationship between the repeater chip 1500 illustrated in FIGs. 17 and 18 and a CPU socket on which the repeater chip 1500 is mounted.
When the repeater chip 1500 is mounted on the CPU socket 1610, the terminals a31, a32, and a33 of the repeater chip 1500 respectively connect to the terminals a11, a12, and a13 of the CPU socket 1610. Moreover, the terminals b31, b32, and b33 of the repeater chip 1500 respectively connect to the terminals b11, b12, and b13 of the CPU socket 1610. As a result, the repeater chip 1500 connects between the terminals a11 and b11, between the terminals a12 and b12, and between the terminals a13 and b13.

Additionally, when the repeater chip 1500 is mounted on the socket 1620, the terminals a34 and a35 of the repeater chip 1500 respectively connect to the terminals a24 and a25 of the CPU socket 1620. Moreover, the terminals b34 and b35 of the repeater chip 1500 respectively connect to the terminals b24 and b25 of the CPU socket 1620. As a result, the repeater chip 1500 connects between the terminals a24 and b24, and between the terminals a25 and b25.

Even when a fault occurs in either of the CPUs 410 and 420, the CPU where the fault does not occur is enabled to use an IO device connected to the CPU where the fault occurs by replacing the CPU where the fault occurs with the repeater chip 1500.

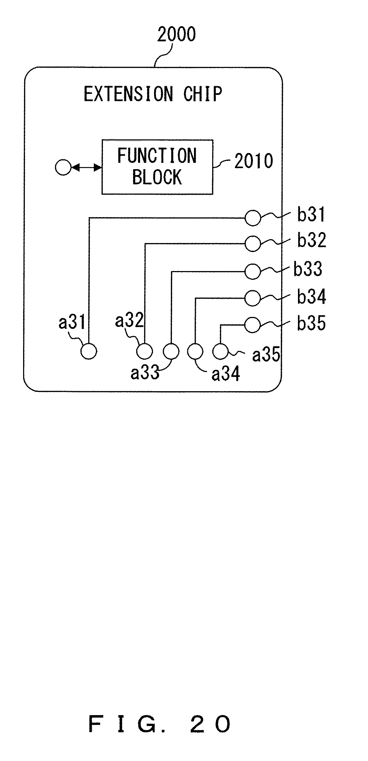

In the above provided explanation, also an extension chip 2000 illustrated in FIG. 20 is available as a replacement for the repeater chip 1500 illustrated in FIG. 15. For example, when a fault occurs in a mounted extension chip on a system board on which the extension chip used to extend an accelerator, an IO or the like is mounted as a replacement for the CPU 410 illustrated in FIG. 4, the extension chip 2000 is available.

The extension chip 2000 includes a function block 2010 having a function of extending an accelerator, an IO, and other functions. Similarly to the repeater chip 1500, the extension chip 2000 further includes circuits that respectively short-circuit between the terminals a31 and b31, between the terminals a32 and b32, between the terminals a33 and b33, between the terminals a34 and b34, and between the terminals a35 and b35. As a result, the extension chip 2000 is enabled to connect between the terminals a11 and b11, between the terminals a12 and b12, between the terminals a13 and b13, between the terminals a14 and b14, and between the terminals a15 and b15. As a result, even when a fault occurs in a mounted extension chip, the CPU 420 is enabled to use an IO device connected to the extension chip where the fault occurs by replacing the extension chip where the fault occurs with the extension chip 2000.

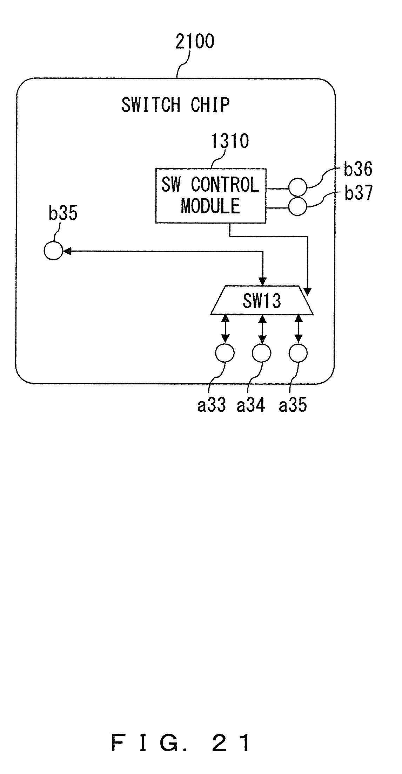

Additionally, also a switch chip 2100 illustrated in FIG. 21 is available as a replacement for the CPU 1300 illustrated in FIG. 13. The switch chip 2100 is a circuit including the SW control module 1310 and the switch SW 13, which are illustrated in FIG. 13.

For example, if a fault occurs in the CPU 420, which is therefore disabled to run, the CPU 410 is enabled to use an IO device connected to the CPU 420 where the fault occurs by mounting the switch chip 2100 as a replacement for the CPU 420, and by switching the DIP switch as the switch 1320.

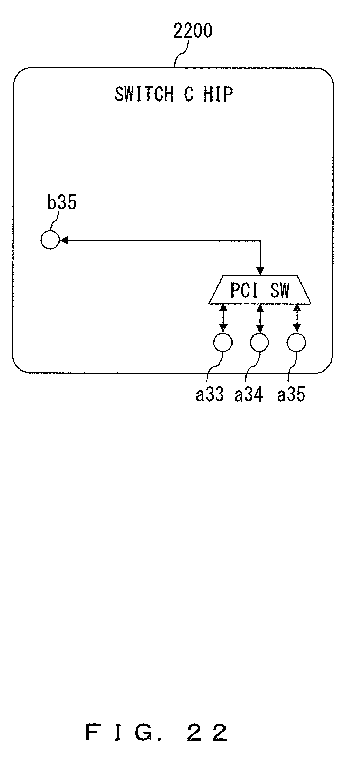

Additionally, also a switch chip 2200 illustrated in FIG. 22 is available as a replacement for the CPU 1400 illustrated in FIG. 14. The switch chip 2200 is a circuit including the PCI SW 1410 illustrated in FIG. 14.

For example, if a fault occurs in the CPU 420, which is therefore disabled to run, the CPU 410 is enabled to use an IO device connected to the CPU 420 where the fault occurs by mounting the switch chip 2200 as a replacement for the CPU 420.

In the above described examples, the CPU 410 or 420 is cited as one example of the computing device. Moreover, the core 540 is cited as one example of the computing unit. Additionally, the switches SW1-5 are cited as examples of the switching unit. Furthermore, the reset signal controller 520 is cited as one example of the signal generation unit.

Additionally, in the CPU 410, the bus for connecting between the LIO bus controller 411 and the legacy IO controller 430, and the bus for connecting between the PCI bus controller 412 and the PCI socket 440 are cited as examples of the first path. In the CPU 410, the bus for connecting between the terminal b11 connected to the LIO bus of the CPU 420 and the legacy IO controller 430 is cited as one example of the second path. Also the buses for respectively connecting between the terminals b12, b13, b14, and b15, which are connected to the PCI buses of the CPU 420, and the PCI sockets 441, 442, 443, and 444 are cited as examples of the second path.

As described above, for example, on the system board 400 illustrated in FIG. 5, upon receipt of an error occurrence notification from the CPU 410, the BCM 450 determines content of the error. If the error is a fatal error, the BCM 450 executes a reboot process while asserting a reset signal for the CPU 410 where the fatal error occurs. This enables the BCM 450 to degenerate the CPU 410. At the same time, the reset signal is asserted, so that the switching terminal A of the switches SW1-5 included in the CPU 410 is switched to the switching terminal B. Consequently, the CPU 420 is enabled to continuously use IO devices connected to the CPU 410, for example, a disk and a LAN, which are connected to the legacy IO controller 430, and an IO device connected to the PCI socket 440.

## Claims

1. An information processing device including a plurality of computing devices connecting to a peripheral device, wherein:
at least one of the plurality of computing devices comprises
a computing unit configured to execute a computation process,
a first path configured to connect between the computing unit and the peripheral device,
a second path configured to connect between a computing unit included in a different computing device and the peripheral device, and
a switching unit configured to switch between the first path and the second path; and
the information processing device further comprises
a signal generation unit configured to generate a switching signal for causing the switching unit to switch between the first path and the second path, and to output the generated signal to the switching unit.

2. The information processing device according to claim 1, wherein
the signal generation unit generates the switching signal for switching the switching unit to the second path upon detection of an error that occurs within the computing device.

3. The information processing device according to claim 1, wherein
the signal generation unit comprises selection means configured to select the first path or the second path, and generates a switching signal for switching the switching unit to the path selected by the selection unit.

4. The information processing device according to claim 1, wherein
the computing device comprises signal holding means configured to hold the switching signal output by the signal generation unit, and
the signal held by the signal holding means is output to the switching unit.

5. The information processing device according to claim 2, wherein
the switching signal is a reset signal for the computing device.

6. An information processing device including a plurality of computing devices connecting to a peripheral device, the information processing device comprising:
at least one computing device comprising
a computing unit configured to execute a computation process,
a first path configured to connect between the computing unit and the peripheral device,
a second path configured to connect between a computing unit included in a different computing device and the peripheral device,
a switching signal generation unit configured to generate a switching signal for switching to the first or the second path according to a given selection signal, and
a switching unit configured to switch between the first path and the second path according to the switching signal; and
selection means, having means for selecting the first or the second path, configured to generate a selection signal for selecting the selected path, and to output the generated signal to the switching signal generation unit.

7. An information processing device including a computing device connecting to a peripheral device, wherein
the computing device comprises
a first path configured to connect between a computing unit configured to execute a computation process and the peripheral device,
a second path configured to connect between a computing unit that is included in a different computing device and configured to execute a computation process and the peripheral device, and
a switching unit configured to output information to a specified peripheral device according to a destination included in the information transmitted from the different computing device via the second path.

8. A computing device connecting to a peripheral device, comprising:
a first path configured to connect between a computing unit configured to execute a computation process and the peripheral device;
a second path configured to connect between a computing unit that is included in a different computing device and configured to execute a computation process and the peripheral device; and
a switching unit configured to switch between the first path and the second path according to an externally input particular signal.
